# EUROPEAN PATENT APPLICATION

(11) **EP 4 116 138 A2**
(43) Date of publication of application: **11.01.2023**
(21) Application number: 22179238.5
(22) Date of filing: 15.06.2022
(51) Int. Cl.: B60L 53/00

(54) **A CHARGING ASSEMBLY AND METHOD**

(30) Priority: 16.06.2021 NO 20210774
(71) Applicant: Defa AS, 3540 Nesbyen (NO)
(72) Inventor: KOPPERUD, Agnar, 1386 Asker (NO); VETHE, Vegard, 0276 Oslo (NO)
(74) Representative: Zacco Norway AS

(57) **Abstract**

A charging assembly comprises a charging control unit (2; 2') which is either releasably or permanently connected to a power source, and a secondary charging cable (4) having a secondary electric connector (5). The charging control unit (2; 2') comprises a charging current control device (12) which is configured for altering a charging current between multiple charging currents (CC1, CC2, CC3). The charging control unit (2) comprises an input device (7), by means of which a user may control the alteration between multiple charging currents.

## Description

### Technical field of the invention

The invention concerns the field of electric vehicles and vessels, and in particular a charging control unit and associated method for an electric vehicle, as set out by the preambles of independent claims 1 and 7.

### Background of the invention

Batteries for powering electric vehicles (EV), such as electric cars, require charging from time to time. Charging is facilitated by electrically connecting the on-board EV battery or batteries to an external power generator or power source, for example an AC power grid. The connection may be via a cable (conductive charging) or by induction (wireless charging).

A number of conductive charging modes exist, where Mode 2 and Mode 3 (as described in European terms) are the more common ones used for charging electric cars.

Mode 3 involves a charging control unit which is fixedly mounted (on for example a wall or post) and permanently connected to an AC power grid. The charging control unit comprises necessary control and communications systems for charging the EV battery. To charge the battery, a user (e.g. a motorist) connects a designated cable between the EV and the charging unit. The cable is fitted with connectors (plugs) that are compatible with the EV and the charging unit. One common connector type is referred to as a "Type 2 connector". A Mode 3 charging cable therefore typically comprises a Type 2 connector at each end, and the cable is normally stowed in the EV when not in use. Mode 3 is commonly used in commercial roadside charging stations.

Mode 2 involves a portable system which the motorist typically carries in the EV and uses when a Mode 3 system or other charging systems are unavailable. The Mode 2 system comprises a portable charging control unit with two cables. The first cable is intended for connection to a conventional household socket (and to an AC power grid), and the secondary cable is intended for connection to a designated socket in the EV. The first cable, which is often referred to as the "primary cable", therefore comprises a conventional household connector, such as a Schuko^{®} plug. The second cable, which is often referred to as the "secondary cable", comprises a connector compatible with the EV socket, for example a Type 2 connector.

A common problem with Mode 2 systems is that the household connector on the primary cable in certain conditions may overheat, due to a high load (charging current) over an extended duration. Therefore, Mode 2 charging control units are commonly configured to limit the load if the charging sequence last longer than a specified time. As an example, Norwegian regulations state that the load must be limited to 10A if the charging duration is to exceed two hours. These limitations, intended for avoiding the overheating problem, therefore increases the charging time, to the disadvantage of the user (the motorist). The present invention aims at resolving this problem and to further improve the Mode 2 system. It is also an objective of the invention to optimize the charging procedure by providing as much charging current as possible to the EV within regulatory and technical constraints.

The prior art includes EP 2 824 794 A1, which describes a charging cable having a power plug, a charging plug, and an intermediate charging apparatus. The power plug includes a temperature sensor and is detachably connected to an electric outlet, and the charging plug is detachably connected to an electric vehicle (EV). The charging apparatus includes a control unit which comprises a microcontroller. The microcontroller is configured to automatically control (i.e. stop and resume) charging of the EV battery based on detected power plug temperature in comparison with predetermined threshold values.

### Summary of the invention

The invention is set forth and characterized in the main claim, while the dependent claims describe other characteristics of the invention.

It is thus provided a charging assembly, comprising a charging control unit which is either releasably or permanently connectable to an electric power source, a secondary charging cable connected to the charging control unit and comprising a secondary electric connector for connection to an electric vehicle or vessel, characterized in that the charging control unit comprises:
- a charging current control device which is configured for altering a charging current between multiple charging currents CC1, CC2, CC3, and
- an input device by means of which a user may control the alteration between said multiple charging currents, and the input device comprises individual modes for activating respective charging currents CC1, CC2, CC3.

In one embodiment, CC3 < CC1 < CC2.

In one embodiment, a first magnitude (BdCC) between CC2 and CC1 and a second magnitude (LdCC) between CC3 and CC1, are predefined in the control module. In one embodiment, the first magnitude (BdCC) is associated with a first duration (D1), and the second magnitude (LdCC) is associated with a second duration (D2), and said first and second durations are predefined in the control module.

In one embodiment, the charging assembly comprises a primary charging cable connected to the charging control unit and having a primary electric connector for releasable connection to a power source .

In one embodiment, the primary connector and/or the charging control unit comprise a respective temperature sensor which communicate with the charging current control device.

It is also provided a method of charging a battery in an electric vehicle or vessel by means of the invented charging assembly, the method characterized by:
a) at a first time (T1), connecting the secondary electric connector to an electric vehicle or vessel, whereby a first charging current is established and maintained for a nominal duration (D) until the battery is fully charged at a second time (T2);
b) providing:
   - one or more first inputs (7a) to the charging current control device to raise the charging current by a predefined first magnitude (BdCC) to a second charging current for a first predetermined duration (D1) or a plurality of first predetermined durations (D1a, D1b), whereby the time to fully charge the battery is less than the nominal duration (D);
      or
   - providing a second input (7c) to the charging current control device to lower the charging current by a predefined second magnitude (LdCC) to a third charging current for a second predetermined duration (D2) or a plurality of second predetermined durations (D2a, D2b), whereby the time to fully charge the battery is greater than the nominal duration (D),
      and
   - the sum of the plurality of first predetermined durations (D1a, D1b) is less than or equal to the first predetermined duration (D1), and
   - the sum of the plurality of second predetermined durations (D2a, D2b) is less than or equal to the nominal duration (D). Step b) may be executed by entering designated commands into an input device.

If the charging assembly comprises a primary charging cable connected to the charging control unit and having a primary electric connector (6) for releasable connection to a power source - step a) is preceded by a step of connecting the primary electric connector to a power source.

### Brief description of the drawings

These and other characteristics of the invention will become clear from the following description of an embodiment of the invention, given as a non-restrictive example, with reference to the attached schematic drawings, wherein:
Figure 1 is view of an embodiment of the charging assembly according to the invention, comprising a charging control unit and primary and secondary cables;
Figure 2 is a schematic diagram of an embodiment of an input device on the charging control unit;
Figure 3 is a schematic diagram of two embodiments of the charging assembly according to the invention, identifying only key parts necessary for understanding the invention;
Figure 4 is a plot of charging current versus time, showing a normal charging mode and a boosted charging mode;
Figure 5 is a plot similar to that of figure 4, illustrating multiple charging modes;
Figure 6 is a plot of charging current versus time, showing a normal charging mode and a derated charging mode; and
Figure 7 is a plot similar to that of figure 6, illustrating multiple derated modes.

### Detailed description of embodiments of the invention

The following description may use terms such as "horizontal", "vertical", "lateral", "back and forth", "up and down", "upper", "lower", "inner", "outer", "forward", "rear", etc. These terms generally refer to the views and orientations as shown in the drawings and that are associated with a normal use of the invention. The terms are used for the reader's convenience only and shall not be limiting.

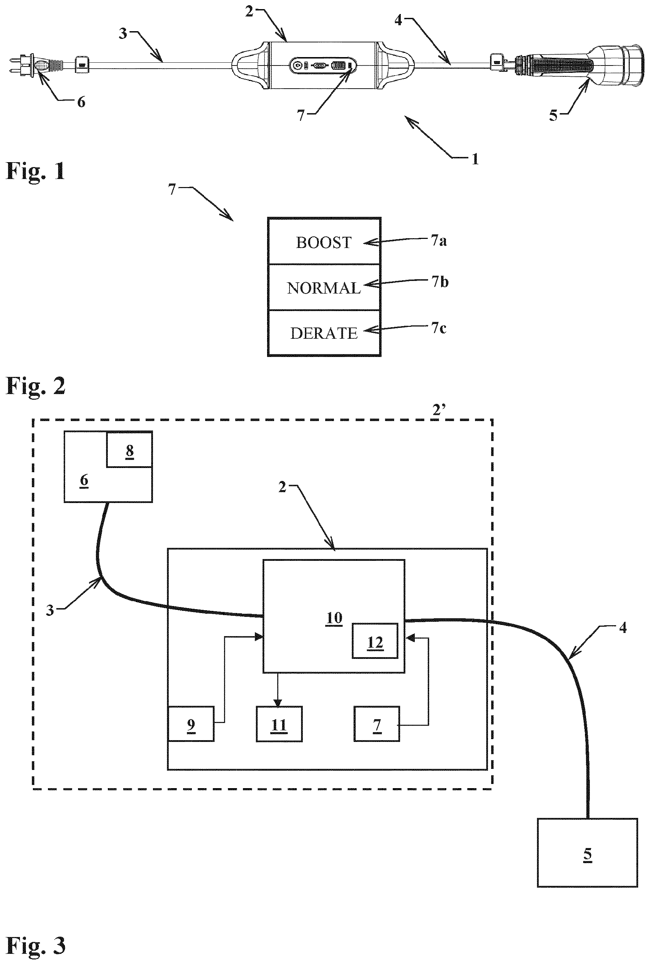

Figure 1 shows an embodiment of the invented charging assembly, comprising a charging control unit 2, a primary cable 3, and a secondary cable 4. The secondary cable 4 comprises a secondary electric connector 5 for releasable connection to a connector in an electric vehicle (EV). The secondary cable may be permanently connected to the control unit, or may be releasably connected to the control unit via a suitable connector. The secondary connector may be a Type 2 connector plug, but may also be of other types.

The primary cable 3 comprises a primary electric connector 6 for connection to a power source or power grid, for example via an AC power outlet socket (not shown). The primary connector 6 may be a conventional household connector, such as a Schuko^{®} plug, or other connector. The primary cable may be permanently connected to the control unit, or may be releasably connected to the control unit via a suitable connector.

In the illustrated embodiment, the charging control unit 2 comprises a housing, with indicator lights that are well known in the art, and an input device 7. The input device 7 is configured for a user to control certain aspects of the charging procedure in a manner which is described below. The input device 7 may be a toggle switch, a scrolling wheel, a touch-sensitive surface, or any other means for a user to enter predefined commands into the charging control unit. Figure 2 illustrates key functions of the input device 7.

Figure 3 is a schematic diagram illustrating key components of the invention. Only features that are necessary for the skilled person to understand the invention are included in figure 3, as general features and functions necessary for the operation of a charging control unit are well known in the art. In the illustrated embodiment, the primary electric connector 6 comprises a temperature sensor 8 which communicates with a control module 10 inside the charging control unit 2. The control module 10 comprises a charging current control device 12, which is configured for altering the charging current between predefined levels. The control module 10 further comprises required parts, circuitry, and functionality to perform a charging procedure, including, but not necessarily limited to, micro-processors, inverter (AC/DC) module, current sensor, voltage sensor, positive earth detection sensor, a residual-current device (RCD), circuits, relays, switches, circuit breakers, and timers.

A temperature sensor 9 is arranged in the control unit 2, and communicates with the control module 10, and the above-mentioned the input device 7 is also connected for communication with the control module. Reference number 11 denotes a display for communicating information to the user. The display 11 may comprise indicator lights as mentioned above, or a more elaborate information device.

A user (e.g. a motorist) will typically use the invented charging assembly by first connecting the primary connector 6 to a power source, commonly to a conventional household socket (and to an AC power grid), and then connect the secondary connector 5 to a designated socket in the EV. This will cause a charging procedure to start automatically, without any further user input.

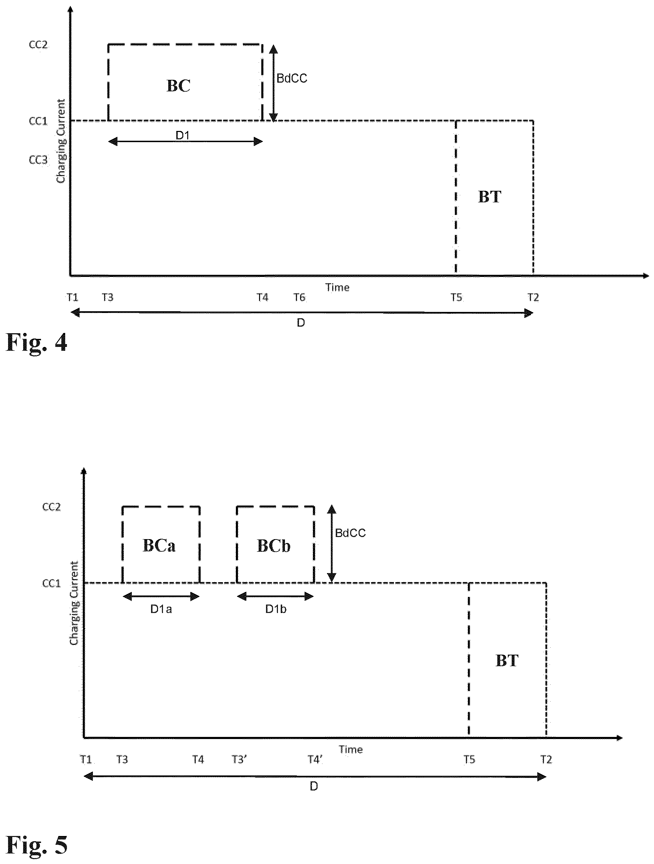

Referring to figure 4, a *normal charging procedure* is initiated at a starting time T1 by the charging current control device 12 automatically setting the charging current to CC1, which has been pre-programmed into the control module. The charging current will be controlled to be constant at CC1 until the control module receives information that the battery is fully charged at time T2, at which time the charging is terminated. During this sequence, the charging will be interrupted if any of the temperature sensors 6, 8 detect temperatures above a predefined level.

If, at any time during this duration D between T1 and T2, while the normal charging procedure is running, the user should want to accelerate the charging in order to reduce charging time, the user may activate a *boosted charging procedure.* To do so, the user selects the "BOOST" input 7a on the charging control unit 2. In figure 4, this activation is shown as taking place at T3, and the charging current is ramped up by a predefined magnitude BdCC, from CC1 to CC2 by the charging current control device 12. The charging current is maintained at CC2 for a predefined boosting duration D1, until T4, where it is reduced to CC1. D1 and BdCC are predefined and pre-programmed parameters that may be based on governmental regulations technical constraints, and defined to avoid overheating in the primary connector or control unit. For example, in a nominal normal charging sequence of duration D of two hours, D1 may be 90 minutes. This boosted charging procedure will cause the battery to become fully charged at T5, i.e. earlier than it would have been without the boosting charging procedure. Note that in figure 4, the area BC equals area BT, i.e. (T4 - T3) ^{∗} (CC2 - CC1) = (T2 - T5) ^{∗} CC1.

Referring to figure 5, boosted charging can also be activated for shorter durations, as long as the total boosting duration is within the built-in maximum boosting duration D1, i.e. (D1a + D1b) ≤ D1. Note that the areas BCa + BCb = BT i.e. ((T4 - T3) + (T4' - T3')) ^{∗} (CC2 - CC1)) = (T2 - T5) ^{∗} CC1.

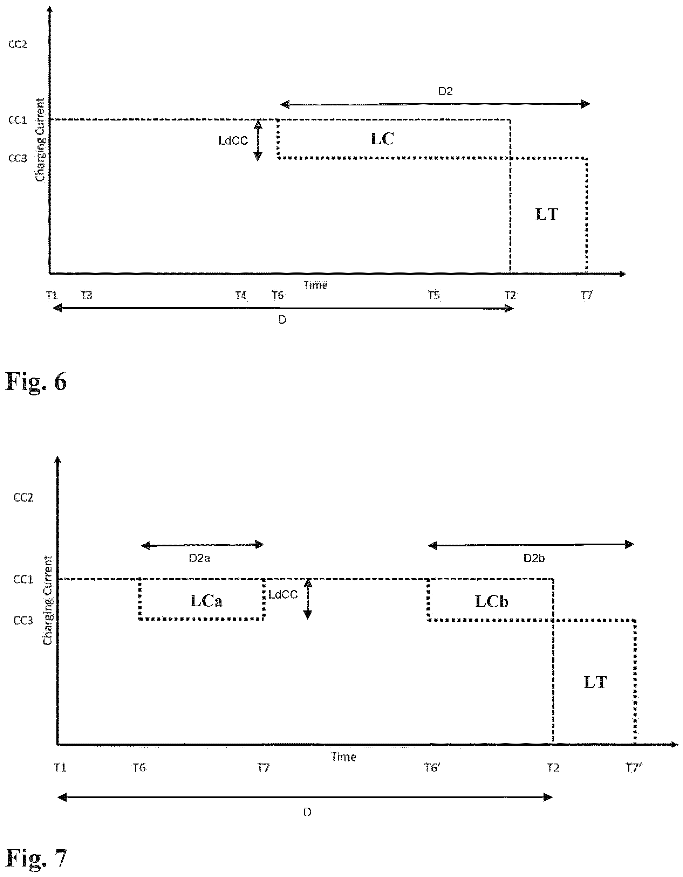

If, at any time during duration D (T2 - T1), while either the normal charging procedure or the boosted charging procedure is running, the user should want to decrease the charging current (and thus accept a longer duration before the battery is fully charged), the user may activate a *derated charging procedure.* To do so, the user selects the "DERATE" input 7c on the charging control unit. In figure 6, this activation is shown as taking place at T6, and the charging current is reduced (by the charging current control device 12) by a predefined magnitude LdCC from CC1 to CC3 (CC3 < CC1). When this procedure is activated, the derated charging duration D2 will cause the total charging duration to increase, in figure 6 until T7 before the battery is full. Note that area LC = LT, i.e. (T2-T6)^{∗}(CC1-CC3) = (T7-T2)^{∗}CC3).

Figure 7 illustrates how the derated charging procedure can be selected multiple times, as long as the sum of the durations (D2a, D2b, etc.) is less than D. It is possible to run the derated charging procedure for the entire charging duration.

The boosted charging procedure and the derated charging procedure may be terminated by the user selecting the "NORMAL" input 7b on the charging control unit. The charging current control device 12 is programmed such that:
- If the charging is ended at CC1 charging level ("normal"), the next sequence will start in at that level if not altered by the user.
- If the charging is ended at CC2 charging level ("boosted"), the next sequence will start at CC1 if not altered by the user.
- If the charging is ended at CC3 charging level ("derated"), the next sequence will start at CC3 if not altered by end user.
- If at any time during the boosted charging procedure, the temperature sensed by sensors 8 or 9 exceeds a predefined level, the charging current control device will terminate the boosted charging procedure and reset the charging current to CC1. The same applies to the derated charging procedure.

Although the invention has been described with reference to three distinct charging current (CC1, CC2, CC3), the invention shall not be limited to this number. It should be understood that the charging current control device 12 may be configured to alter the charging current between multiple charging current levels. The alteration may be instantaneous, as shown in the figures, or may be gradual over a period of time.

Although the invention has been described above with reference to a Mode 2 system for electric cars, it should be understood that the invention is applicable for any electric vehicle or vessel, and to any system having the features specified by the appended claims.

It should thus also be understood that the invention is equally applicable for a system in which the charging control unit 2, primary cable 3, and primary electric connector 6 are integrated into one charging control unit. This is illustrated by the dotted line 2' in figure 3. Such configuration could for example encompass the Mode 3 system described above - or similar systems - in which the charging control unit 2' is fixedly mounted on a wall or other structure and permanently connected to an AC power grid.

## Claims

1. A charging assembly, comprising a charging control unit (2; 2') which is either releasably or permanently connectable to an electric power source, a secondary charging cable (4) connected to the charging control unit and comprising a secondary electric connector (5) for connection to an electric vehicle or vessel, **characterized in that** the charging control unit (2; 2') comprises:
- a charging current control device (12) which is configured for altering a charging current between multiple charging currents (CC1, CC2, CC3), and
- an input device (7), by means of which a user may control the alteration between said multiple charging currents, and the input device comprises individual modes (7a-c) for activating respective charging currents (CC1, CC2, CC3).

2. The charging assembly of claim 1, wherein CC3 < CC1 < CC2.

3. The charging assembly of claim 2, wherein a first magnitude (BdCC) between CC2 and CC1 and a second magnitude (LdCC) between CC3 and CC1, are predefined in the control module.

4. The charging assembly of claim 3, wherein
- the first magnitude (BdCC) is associated with a first duration (D1), and
- the second magnitude (LdCC) is associated with a second duration (D2), and
- said first and second durations are predefined in the control module.

5. The charging assembly of any one of claims 1-4, further comprising a primary charging cable (3) connected to the charging control unit (2) and having a primary electric connector (6) for releasable connection to a power source.

6. The charging assembly of claim 5, wherein the primary connector (6) and/or the charging control unit (2; 2') comprise a respective temperature sensor (8, 9) which communicate with the charging current control device (12).

7. A method of charging a battery in an electric vehicle or vessel by means of the charging assembly of any one of claims 1-6, the method **characterized by:**
a) at a first time (T1), connecting the secondary electric connector (5) to an electric vehicle or vessel, whereby a first charging current (CC1) is established and maintained for a nominal duration (D) until the battery is fully charged at a second time (T2);
b) providing:
- one or more first inputs (7a) to the charging current control device (12) to raise the charging current by a predefined first magnitude (BdCC) to a second charging current (CC2) for a first predetermined duration (D1) or a plurality of first predetermined durations (D1a, D1b), whereby the time to fully charge the battery is less than the nominal duration (D);
or
- providing a second input (7c) to the charging current control device (12) to lower the charging current by a predefined second magnitude (LdCC) to a third charging current (CC3) for a second predetermined duration (D2) or a plurality of second predetermined durations (D2a, D2b), whereby the time to fully charge the battery is greater than the nominal duration (D),
and
- the sum of the plurality of first predetermined durations (D1a, D1b) is less than or equal to the first predetermined duration (D1), and
- the sum of the plurality of second predetermined durations (D2a, D2b) is less than or equal to the nominal duration (D).

8. The method of claim 7, wherein step b) is executed by entering designated commands into an input device (7).

9. The method of any one of claims 7-8, wherein - if the charging assembly comprises a primary charging cable (3) connected to the charging control unit (2) and having a primary electric connector (6) for releasable connection to a power source - step a) is preceded by a step of connecting the primary electric connector (6) to a power source.
